# EUROPEAN PATENT SPECIFICATION

(11) **EP 2 320 166 B1**
(45) Date of publication and mention of the grant of the patent: **12.09.2018**
(21) Application number: 10251722.4
(22) Date of filing: 01.10.2010
(51) Int. Cl.: F25B 41/06

(54) **Expansion valve**
Expansionsventil
Vanne d'expansion

(30) Priority: 01.10.2009 US 571615
(43) Date of publication of application: 11.05.2011
(73) Proprietor: Hamilton Sundstrand Corporation, Windsor Locks, CT 06096-1010 (US)
(72) Inventor: Marocchini, Francis P., Somers Connecticut (US)
(74) Representative: Dehns

(56) References cited:
- EP-A1- 0 762 442
- EP-A1- 1 413 811
- EP-A2- 0 147 356
- EP-A2- 0 147 357
- EP-A2- 1 275 874
- WO-A1-94/09329
- DE-C- 602 948
- FR-A- 1 186 275
- US-A- 3 285 285
- US-A- 3 872 685
- US-A- 4 103 702
- US-A- 4 452 424
- US-A- 5 076 326
- US-A- 5 957 161

## Description

### BACKGROUND OF THE INVENTION

The subject matter disclosed herein relates to refrigeration systems. More particularly, the subject matter disclosed herein relates to expansion valves for refrigeration systems.

In a typical expansion valve, an inlet and outlet of the expansion are disposed at some angular orientation to each other, for example, an angle of approximately 90 degrees between the inlet and the outlet. The valve includes a stopper which blocks flow from the inlet when the valve is in a closed position, and allows flow into the valve and out through the outlet when the valve is in an opened position. The inlet and stopper are oriented such that the direction of flow into the inlet against the stopper is substantially the same as the direction of movement of the stopper to open and/or close the valve. With the orientation as such, the stopper and the mechanism utilized to articulate the stopper must absorb all of the fluid momentum forces of the fluid entering the valve at the inlet. Thus, to control the operation of the stopper, the mechanism must be sized accordingly to overcome the fluid momentum forces acting on it. This results in larger, more powerful mechanisms being necessary. Further, the typical configuration is very sensitive to pressure and flow levels of the fluid as well as variations in pressure deltas across the valve. The art would well receive an expansion valve which reduces forces necessary to control activation of the valve, and one that is less sensitive to pressure variations across the valve.

A valve assembly with the features of the preamble of claim 1 is disclosed in US 3,872,685 and EP 0147356. A related method of flowing fluid through the valve assembly is also disclosed in these documents.

### BRIEF DESCRIPTION OF THE INVENTION

From one aspect, the present invention provides a valve assembly in accordance with claim 1.

From another aspect the present invention provides a method of flowing a fluid through a valve assembly in accordance with claim 5.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an embodiment of an expansion valve;
FIG. 2 is an exploded view of an embodiment of an expansion valve; and
FIG. 3 is a cross-sectional view of an embodiment of an expansion valve in an opened position.

The detailed description explains embodiments of the invention, together with advantages and features, by way of example with reference to the drawings.

### DETAILED DESCRIPTION OF THE INVENTION

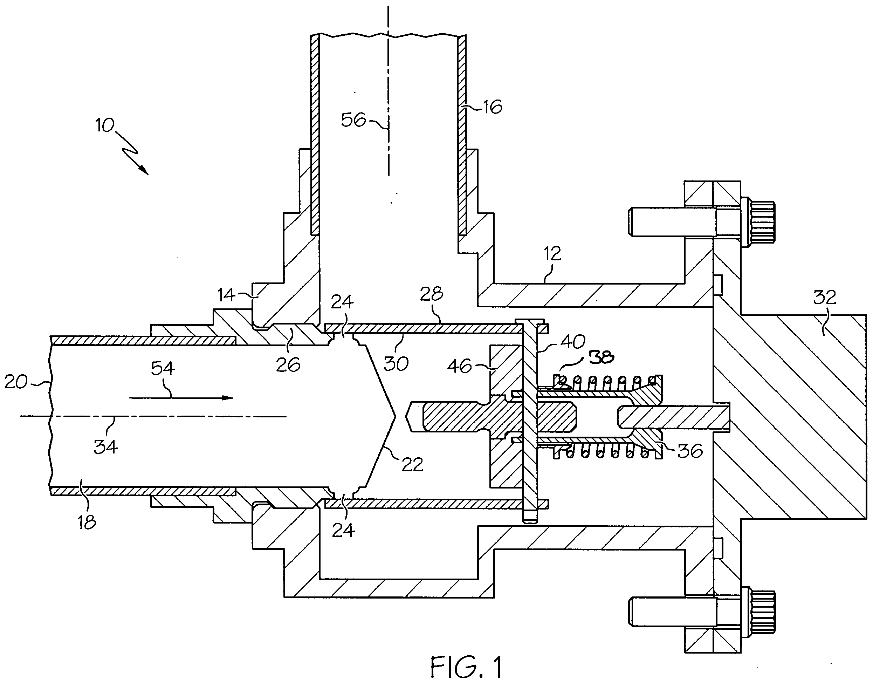

Shown in FIG. 1 is a cross sectional view of an expansion valve 10. The expansion valve 10 includes housing 12 having an inlet 14 and an outlet 16. In the embodiment shown in FIG. 1, an angle between the inlet 14 and the outlet 16 is approximately 90 degrees. It is to be appreciated, however, that other angular configurations are contemplated by the present disclosure.

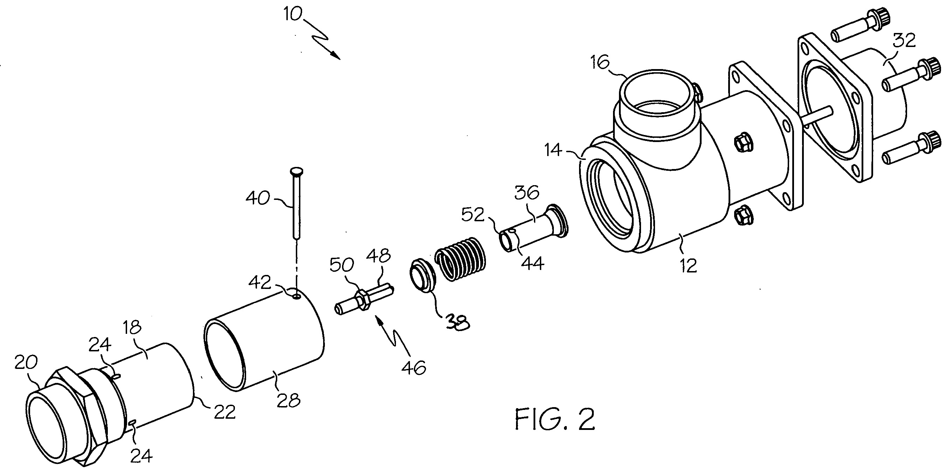

A spool 18 is disposed at the inlet 14. The spool 18 is substantially tubular in cross section and is open at an upstream end 20 and closed at a downstream end 22. The spool 18 includes a plurality of spool openings 24 extending through an outer surface 26 of the spool 18. In some embodiments, the spool openings 24 are substantially equally spaced around a circumference of the spool 18. The spool openings 24 may be substantially any cross section, for example, circular, or as shown in FIG. 2, slots. The spool 18 is insertable into the inlet 14 and secured therein such that the plurality of spool openings 24 are disposed inside of the housing 12. The spool 18 may be secured to the housing 12 via, for example, a threaded connection 26.

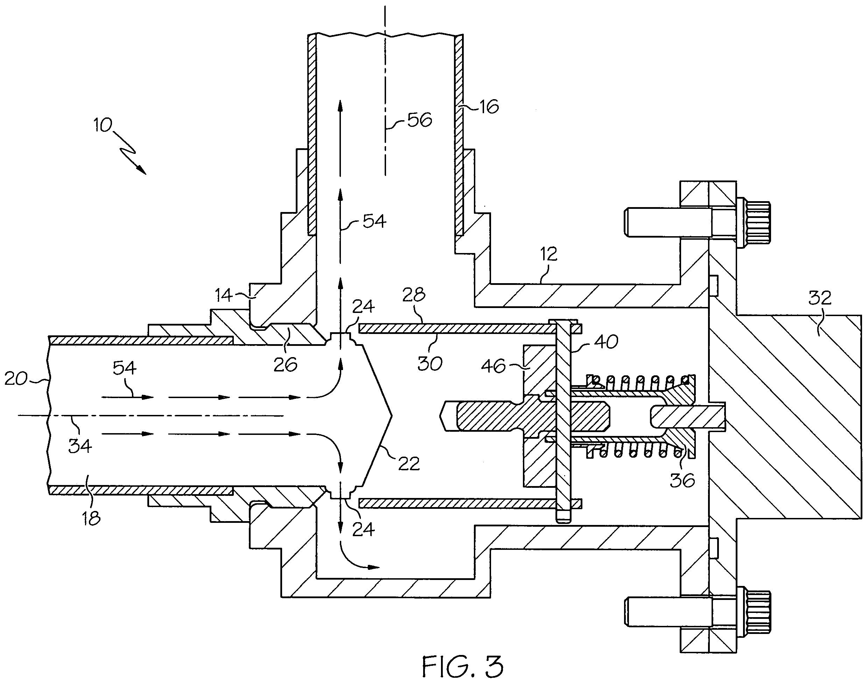

A tubular sleeve 28 is disposed in the housing 10. The sleeve 28 extends over the spool 18 such that when the valve 10 is in a closed position, as shown in FIG. 1, the sleeve 28 covers each of the spool openings 24. The outer surface 26 of the spool and an inner surface 30 of the sleeve 28 are configured to provide a desired degree of sealing at the spool openings 24 when the valve 10 is in the closed position. The sleeve 28 is connected to an activation mechanism, for example a motor 32, which articulates the sleeve 28 along an inlet axis 34 to uncover the spool openings 24 to open the valve 10, as shown in FIG. 3, and likewise cover the spool openings 24 to close the valve 10. The motor 32 is a stepper motor which is capable of moving the sleeve 28 in predetermined increments.

Referring to FIG. 2, the sleeve 28 is attached to the motor 32 via one or more connecting rods 36. In some embodiments, the connecting rod 36 includes a spring loaded seat 38 to absorb backlash in the valve 10 and to maintain necessary clearances to ensure smooth operation of the valve 10. The sleeve 28 connects to the connecting rod 36 via a pin 40 that extends through sleeve holes 42 in the sleeve 28 and through corresponding rod holes 44 in the connecting rod 36. Further an anti-rotation yoke 46 is disposed in an interior of the connecting rod 36. The yoke 46 includes tines 48 between which the pin 40 passes, and through corresponding rod holes (not shown) in the connecting rod 36. The yoke 46 includes wrenching features 50 to allow the yoke 46 to be torqued into the spool 18. The yoke 46 is fixed and retains the threaded connecting rod 36 from rotating to produce the axial translation of the sleeve 28 as an output shaft of the motor 32 rotates.

In operation, a fluid flow 54 enters the valve 10 at the inlet 14 and enters the sleeve 18 substantially parallel to the inlet axis 34. The fluid flow 54 impacts the closed downstream end 22 of the spool 18. As the fluid flow 54 impacts the downstream end 22, the fluid flow 54 momentum forces are absorbed by the spool 18 which is grounded to the housing 12. Reduction of momentum forces of the fluid flow 54 enables better control of the tubular sleeve 28. To allow the fluid flow 54 through the valve 10 and out of the outlet 16, the motor 32 is activated and the sleeve 28 is articulated along the inlet axis 34, as shown in FIG. 3, to uncover the plurality of spool openings 24. The fluid flow 54 turns substantially perpendicular to the inlet axis 34 and flows through the spool openings 24 in a direction substantially parallel to an outlet axis 56. As the fluid flow 54 passes through the spool openings 24, the fluid flow 54 impinges on an inner surface of the spool 28. Because the spool openings 24 are distributed around the circumference of the spool 28, the impingement forces are substantially in equal and opposite directions so that the resultant net force is substantially zero. In addition, both axial ends of the sleeve 18 are exposed to the same pressure environment, resulting in a pressure balanced sleeve 18. These features enable the tubular sleeve 18 to be exposed to reduced fluid flow and pressure variation effects, allowing for reduced forces to articulate the sleeve 18 through its required range of motion. By turning the flow from along the inlet axis 34 to along the outlet axis 56, the downstream end 22 of the spool 18 absorbs the impact forces of the fluid flow 54, rather than a valve stopper of the typical expansion valve. Further, since the sleeve openings 24 are equally spaced around the sleeve 28, side loads on the valve are reduced. The downstream end 22 of the spool 18 is v-shaped in cross-section to further absorb the impact forces of the fluid flow 54.

The configurations of the valve 10 described having an axial inlet to the spool 18 and radial outlet from the spool 18 via the plurality of spool openings 24 reduces the operating forces needed by the motor 32 to articulate the sleeve 28. Since the motor 32 does not have to overcome the fluid forces acting on the sleeve 28 (as it would in a conventional expansion valve) to close and/or open the valve 10, the operating forces are reduced.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A valve assembly (10) comprising:
a housing (12) including an inlet (14) and an outlet (16);
a tubular inlet spool (18) disposed in the inlet (14) having a closed downstream end (22) and a plurality of spool openings (24) through an outer surface (26) of the inlet spool (18); and
a tubular sleeve (28) disposed over a circumference of the inlet spool (18) and articulable to substantially uncover the plurality of spool openings (24) thereby allowing a fluid flow (54) through the valve assembly (10);
wherein the outlet (16) is disposed such that the fluid flow (54) changes direction approximately ninety degrees between the inlet (14) and the outlet (16);
**characterised in that**
the downstream end (22) of the inlet spool (18) is v-shaped in cross-section; and by the valve assembly further comprising:
a stepper motor (32) operably connected to the sleeve (28) to articulate the sleeve (28);
at least one connecting rod (36), wherein the sleeve (28) connects to the at least one connecting rod (36) via a pin (40) that extends through sleeve holes (42) in the sleeve (28) and through corresponding rod holes (44) in the at least one connecting rod (36); and
a yoke (46) disposed in an interior of the at least one connecting rod (36) including tines (48) between which the pin (40) passes.

2. The valve assembly (10) of Claim 1 wherein the plurality of spool openings (24) are substantially equally spaced around the circumference of the inlet spool (18).

3. The valve assembly (10) of any preceding Claim wherein the sleeve (28) is articulable substantially along an inlet central axis (34).

4. The valve assembly (10) of any preceding Claim wherein the valve assembly (10) is an expansion valve.

5. A method of flowing a fluid (54) through a valve assembly (10), comprising:
urging the fluid (54) into a tubular inlet spool (18) of the valve assembly (10) to a closed downstream end (22) of the inlet spool (18), the closed downstream end (22) of the inlet spool (18) being v-shaped in cross-section;
directing the fluid (54) toward a plurality of spool openings (24) disposed in the outer surface (26) of the inlet spool (18);
articulating a tubular sleeve (28) disposed over the circumference of the inlet spool (18) to substantially uncover the plurality of spool openings (24); and
flowing the fluid (54) through the plurality of spool openings (24) toward an outlet (16) of the valve assembly (10);
wherein the fluid flow (54) changes direction approximately ninety degrees between the inlet (14) and the outlet (16); and
the valve assembly further comprises:
a stepper motor (32) operably connected to the sleeve (28) to articulate the sleeve (28);
at least one connecting rod (36), wherein the sleeve (28) connects to the at least one connecting rod (36) via a pin (40) that extends through sleeve holes (42) in the sleeve (28) and through corresponding rod holes (44) in the at least one connecting rod (36); and
a yoke (46) disposed in an interior of the at least one connecting rod (36) including tines (48) between which the pin (40) passes.

6. The method of Claim 5 comprising absorbing fluid impact forces in the closed downstream end (22) of the inlet spool (18).

7. The method of Claim 5 or 6 wherein the fluid (54) is directed substantially radially outwardly toward the plurality of spool openings (24).

8. The method of Claim 5, 6 or 7 wherein the plurality of spool openings (24) are substantially equally spaced around a circumference of the inlet spool (18).

## Patentansprüche

1. Ventilanordnung (10), umfassend:
ein Gehäuse (12), das einen Einlass (14) und einen Auslass (16) umfasst;
einen röhrenförmigen Einlassschieber (18), der im Einlass (14) angeordnet ist und ein geschlossenes stromabwärtiges Ende (22) und eine Vielzahl von Schieberöffnungen (24) durch eine Außenfläche (26) des Einlassschiebers (18) aufweist; und
eine röhrenförmige Hülse (28), die über einem Umfang des Einlassschiebers (18) angeordnet ist und gelenkig beweglich ist, um die Vielzahl der Schieberöffnungen (24) im Wesentlichen freizulegen, wodurch ein Fluidstrom (54) durch die Ventilanordnung (10) ermöglicht wird;
wobei der Auslass (16) so angeordnet ist, dass der Fluidstrom (54) zwischen dem Einlass (14) und dem Auslass (16) die Richtung um etwa neunzig Grad ändert;
**dadurch gekennzeichnet, dass**
das strömabwärtige Ende (22) des Einlassschiebers (18) einen V-förmigen Querschnitt aufweist; und dadurch, dass die Ventilanordnung weiter Folgendes umfasst:
einen Schrittmotor (32), der in Wirkverbindung mit der Hülse (28) steht, um die Hülse (28) gelenkig zu bewegen;
mindestens eine Verbindungsstange (36), wobei die Hülse (28) mit der mindestens einen Verbindungsstange (36) über einen Stift (40) verbunden ist, der durch die Hülsenlöcher (42) in der Hülse (28) und durch entsprechende Stangenlöcher (44) in der mindestens einen Verbindungsstange (36) verläuft; und
einen Bügel (46), der in einem Inneren der mindestens einen Verbindungsstange (36) angeordnet ist und Zacken (48) umfasst, zwischen denen der Stift (40) durchläuft.

2. Ventilanordnung (10) nach Anspruch 1, wobei die Vielzahl von Schieberöffnungen (24) im Wesentlichen in gleichem Abstand um den Umfang des Einlassschiebers (18) verteilt ist.

3. Ventilanordnung (10) nach einem der vorstehenden Ansprüche, wobei die Hülse (28) im Wesentlichen entlang einer Einlassmittelachse (34) gelenkig beweglich ist.

4. Ventilanordnung (10) nach einem der vorstehenden Ansprüche, wobei die Ventilanordnung (10) ein Expansionsventil ist.

5. Verfahren zum Leiten eines Fluids (54) durch eine Ventilanordnung (10), umfassend:
Treiben des Fluids (54) in einen röhrenförmigen Einlassschieber (18) der Ventilanordnung (10) zu einem geschlossenen stromabwärtigen Ende (22) des Einlassschiebers (18), wobei das geschlossene stromabwärtige Ende (22) des Einlassschiebers (18) einen V-förmigen Querschnitt aufweist;
Lenken des Fluids (54) zu einer Vielzahl von Schieberöffnungen (24), die in der Außenfläche (26) des Einlassschiebers (18) angeordnet sind;
gelenkiges Bewegen einer röhrenförmigen Hülse (28), die über dem Umfang des Einlassschiebers (18) angeordnet ist, um die Vielzahl von Schieberöffnungen (24) im Wesentlichen freizulegen; und
Leiten des Fluids (54) durch die Vielzahl von Schieberöffnungen (24) zu einem Auslass (16) der Ventilanordnung (10);
wobei der Fluidstrom (54) zwischen dem Einlass (14) und dem Auslass (16) die Richtung um etwa neunzig Grad ändert; und
wobei die Ventilanordnung weiter Folgendes umfasst:
einen Schrittmotor (32), der in Wirkverbindung mit der Hülse (28) steht, um die Hülse (28) gelenkig zu bewegen;
mindestens eine Verbindungsstange (36), wobei die Hülse (28) mit der mindestens einen Verbindungsstange (36) über einen Stift (40) verbunden ist, der durch die Hülsenlöcher (42) in der Hülse (28) und durch entsprechende Stangenlöcher (44) in der mindestens einen Verbindungsstange (36) verläuft; und
einen Bügel (46), der in einem Inneren der mindestens einen Verbindungsstange (36) angeordnet ist und Zacken (48) umfasst, zwischen denen der Stift (40) durchläuft.

6. Verfahren nach Anspruch 5, umfassend das Aufnehmen von Stoßkräften des Fluids im geschlossenen stromabwärtigen Ende (22) des Einlassschiebers (18).

7. Verfahren nach Anspruch 5 oder 6 wobei das Fluid (54) im Wesentlichen radial nach außen zu der Vielzahl von Schieberöffnungen (24) gelenkt wird.

8. Verfahren nach Anspruch 5, 6 oder 7 wobei die Vielzahl von Schieberöffnungen (24) im Wesentlichen im gleichen Abstand um einen Umfang des Einlassschiebers (18) verteilt ist.

## Revendications

1. Système de vanne (10) comprenant :
un boîtier (12) comportant une entrée (14) et une sortie (16) ;
une bobine d'entrée (18) tubulaire disposée dans l'entrée (14) ayant une extrémité en aval fermée (22) et une pluralité d'ouvertures de bobine (24) à travers une surface extérieure (26) de la bobine d'entrée (18) ; et
un manchon (28) tubulaire disposé sur une périphérie de la bobine d'entrée (18) et pouvant être articulé pour découvrir sensiblement la pluralité d'ouvertures de bobine (24) permettant ainsi un flux de fluide (54) à travers le système de vanne (10) ;
dans lequel la sortie (16) est disposée de telle sorte que le flux de fluide (54) change de direction approximativement de quatre-vingt-dix degrés entre l'entrée (14) et la sortie (16) ;
**caractérisé en ce que**
l'extrémité en aval (22) de la bobine d'entrée (18) est en forme de v dans la section transversale ; et par système de vanne comprenant en outre :
un moteur pas à pas (32) relié de manière fonctionnelle au manchon (28) pour articuler le manchon (28) ;
au moins une tige de liaison (36), dans lequel le manchon (28) est relié à l'au moins une tige de liaison (36) par l'intermédiaire d'une broche (40) qui s'étend à travers des trous de manchon (42) dans le manchon (28) et à travers des trous de tige (44) correspondants dans l'au moins une tige de liaison (36) ; et
un collet (46) disposé dans un espace intérieur de l'au moins une tige de liaison (36) comportant des dents (48), entre lesquelles la broche (40) passe.

2. Système de vanne (10) selon la revendication 1, dans lequel la pluralité d'ouvertures de bobine (24) est espacée sensiblement de manière équidistante sur la périphérie de la bobine d'entrée (18).

3. Système de vanne (10) selon une quelconque revendication précédente, dans lequel le manchon (28) peut être articulé sensiblement le long d'un axe central d'entrée (34).

4. Système de vanne (10) selon une quelconque revendication précédente, dans lequel le système de vanne (10) est une vanne d'expansion.

5. Procédé d'écoulement d'un fluide (54) à travers un système de vanne (10), comprenant :
la poussée du fluide (54) dans une bobine d'entrée tubulaire (18) du système de vanne (10) vers une extrémité en aval fermée (22) de la bobine d'entrée (18), l'extrémité en aval fermée (22) de la bobine d'entrée (18) étant en forme de v dans la section transversale ;
le guidage du fluide (54) vers une pluralité d'ouvertures de bobine (24) disposée dans la surface extérieure (26) de la bobine d'entrée (18) ;
l'articulation d'un manchon (28) tubulaire disposé sur la périphérie de la bobine d'entrée (18) pour découvrir sensiblement la pluralité d'ouvertures de bobine (24) ; et
l'écoulement du fluide (54) à travers la pluralité d'ouvertures de bobine (24) vers une sortie (16) du système de vanne (10) ;
dans lequel le flux de fluide (54) change de direction approximativement de quatre-vingt-dix degrés entre l'entrée (14) et la sortie (16) ; et
le système de vanne comprend en outre :
un moteur pas à pas (32) relié de manière fonctionnelle au manchon (28) pour articuler le manchon (28) ;
au moins une tige de liaison (36), dans lequel le manchon (28) est relié à l'au moins une tige de liaison (36) par l'intermédiaire d'une broche (40), qui s'étend à travers des trous de manchon (42) dans le manchon (28) et à travers des trous de tige (44) correspondants dans l'au moins une tige de liaison (36) ; et
un collet (46) disposé dans un espace intérieur de l'au moins une tige de liaison (36) comportant des dents (48), entre lesquelles la broche (40) passe.

6. Procédé selon la revendication 5, comprenant l'absorption de forces d'impact de fluide dans l'extrémité en aval fermée (22) de la bobine d'entrée (18).

7. Procédé selon la revendication 5 ou 6, dans lequel le fluide (54) est dirigé sensiblement vers l'extérieur radialement vers la pluralité d'ouvertures de bobine (24).

8. Procédé selon la revendication 5, 6 ou 7, dans lequel la pluralité d'ouvertures de bobine (24) est espacée sensiblement de manière équidistante sur une périphérie de la bobine d'entrée (18).
